# EUROPÄISCHE PATENTSCHRIFT

(11) **EP 3 392 065 B1**
(45) Veröffentlichungstag und Bekanntmachung des Hinweises auf die Patenterteilung: **05.08.2020**
(21) Anmeldenummer: 18154580.7
(22) Anmeldetag: 01.02.2018
(51) Int. Cl.: B60C 13/00, B60C 7/10

(54) **FAHRZEUGREIFEN**
VEHICLE TYRES
PNEU DE VÉHICULE

(30) Priorität: 20.04.2017 DE 102017206678
(43) Veröffentlichungstag der Anmeldung: 24.10.2018
(73) Patentinhaber: Continental Reifen Deutschland GmbH, 30165 Hannover (DE)
(72) Erfinder: Schmidt, Peter, 31275 Lehrte (DE); Heinrich, Nikolas, 30823 Garbsen (DE)
(74) Vertreter: Widjaja, Wira

(56) Entgegenhaltungen:
- US-A- 3 578 055
- US-A1- 2015 328 937
- US-A1- 2016 355 059

## Beschreibung

Die Erfindung betrifft ein Fahrzeugreifen.

Industriereifen kennzeichnen insbesondere dadurch aus, dass bei bestimmten Reifentypen Vollgummireifen eingesetzt werden. Der Vollgummireifen hat eine Abfahrgrenze, wobei bei Erreichen der Abfallgrenze der Industriereifen durch einen Neuen ersetzt werden sollte. Es gibt unterschiedliche Lösungen, die Abfahrgrenze an einem Vollgummreifen zu kennzeichnen.

In US 2015/328937 A1, US 2016/355059 A1 und US 3,578,055 A sind unterschiedliche visuelle Kennzeichnungen zum Anzeigen einer Abfahrgrenze eines Fahrzeugreifens angegeben.

Der Erfindung liegt die Aufgabe zugrunde, einen verbesserten Vollgummreifen bereitzustellen.

Diese Aufgabe wird erfindungsgemäß durch die in Anspruch 1 angegebenen Merkmale gelöst.

Ein Vorteil der Erfindung ist insbesondere darin zu sehen, dass durch die Anordnung des Markierungsbauteiles in einer Nut der Seitenwand auf einfache und sichere Weise eine Kennzeichnung der Abfallgrenze des Vollgummireifens erreicht wird. Das Markierungsbauteil wird fest in der Nut der Seitenwand des Vollgummireifens fixiert. Dadurch wird gewährleistet, dass auch bei einem entsprechenden Materialabrieb auf der Seitenwand die Kennzeichnung der Abfallgrenze visuell erhalten bleibt. Der Fahrzeughalter kann durch die Kennzeichnung mit dem Markierungsbauteil jederzeit auf einfache Weise das Lebenszyklusende des Fahrzeugreifens abschätzen.

In einer vorteilhaften Weiterbildung der Erfindung ist vorgesehen, dass das Markierungsbauteil aus einer farbigen Gummimischung besteht, wobei die farbige Gummimischung sich deutlich von der restlichen Farbe der Seitenwand unterscheidet.
Das Markierungsbauteil besitzt beispielsweise eine hell leuchtende gelbe Farbe. Durch diese Farbgebung lässt sich das Markierungsbauteil deutlich von der schwarzen oder hellen (Non marking Reifen) Gummimischung der Seitenwand unterscheiden.

In einer weiteren vorteilhaften Weiterbildung der Erfindung ist vorgesehen, dass das Markierungsbauteil bei Dunkelheit reflektierende Eigenschaften aufweist. Auf diese Weise lässt sich die Sicherheit beim Fahren mit Industriereifen deutlich erhöhen. Beispielsweise können Fußgänger die Industriereifen auch in der Dunkelheit wahrnehmen.

In einer weiteren vorteilhaften Weiterbildung der Erfindung ist vorgesehen, dass das Markierungsbauteil über einen Formschluss in der Nut der Seitenwand gehalten wird. Dadurch wird eine sichere und einfache Fixierung des Markierungsbauteiles in der Seitenwand gewährleistet.

In einer weiteren vorteilhaften Weiterbildung der Erfindung ist vorgesehen, dass das Markierungsbauteil im Querschnitt auf der Oberseite und der Unterseite eine V-förmige Seite aufweist.
Dadurch wird ein sicherer Formschluss des Markierungsbauteiles mit der Nut in der Seitenwand gewährleistet.

Gemäß der Erfindung ist vorgesehen, dass das Markierungsbauteil im Querschnitt eine Tiefe von mindestens 5 mm aufweist.
Auf diese Weise wird ein sicherer Halt des Markierungsbauteiles in der Seitenwand gewährleistet.
In einer weiteren vorteilhaften Weiterbildung der Erfindung ist vorgesehen, dass das Markierungsbauteil im Querschnitt eine Höhe von höchstens 10 mm aufweist.
Diese Höhenabmessung ist für eine visuelle Kennzeichnung der Abfahrgrenze ausreichend. Außerdem sollte die Höhe des Markierungsbauteiles mindestens 3 mm betragen, um eine deutliche Kennzeichnung der Abfahrgrenze zu erzielen.

In einer weiteren vorteilhaften Weiterbildung der Erfindung ist vorgesehen, dass das Markierungsbauteil über eine Klebeverbindung in der Nut der Seitenwand gehalten wird. Auf diese Weise wird eine hochfeste Verbindung zwischen dem Markierungsbauteil und der Nut in der Seitenwand erreicht.

Gemäß der Erfindung ist vorgesehen, dass das Markierungsbauteil in radialer Richtung des Fahrzeugreifens direkt über der Abfahrgrenze des Vollreifens angeordnet ist.
Wenn das Markierungsbauteil in der Seitenwand nicht mehr sichtbar ist, ist der Fahrzeughalter informiert, dass die Abfahrgrenze erreicht ist und der Fahrzeugreifen ersetzt werden muss.

Anhand mehrerer Ausführungsbeispiele soll die Erfindung näher erläutert werden. Es zeigen:
Fig. 1: einen Vollgummireifen in einer Querschnittansicht,
Fig. 2: das Markierungsbauteil,
Fig. 3: den Vollgummireifen in einer Seitenansicht.

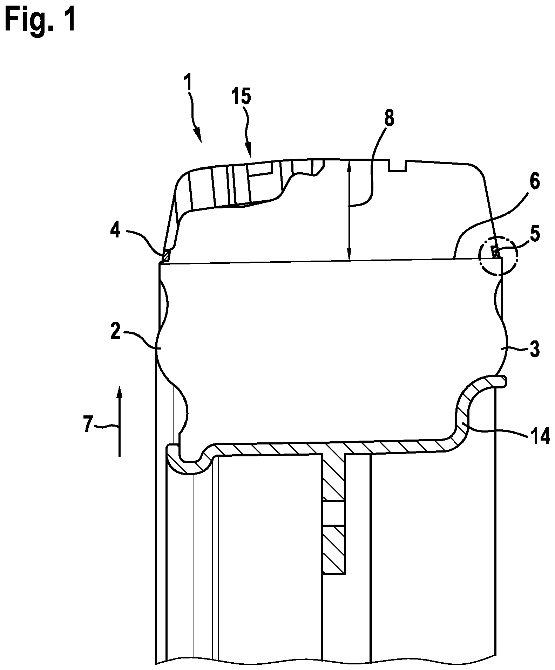

Die Fig. 1 zeigt einen Vollgummireifen 1 in einer Querschnittansicht.

Der Vollgummireifen 1 ist schematisch dargestellt und auf einer Fahrzeugfelge 14 montiert. Auf der linken und rechten Seitenwand 2 und 3 ist jeweils ein Markierungsbauteil 4 und 5 in einer Nut der Seitenwände angeordnet. Die Linie 6 zeigt die Abfahrgrenze des Vollgummireifens 1. Bei Erreichen dieser Abfahrgrenze 6 sollte der Industriereifen durch einen neuen Industriereifen ersetzt werden. Der Vollgummireifen 1 besitzt ein Reifenprofil, wobei die Aussparung bzw. Nut 15 bis zur Höhe der Markierungsbauteile 4 und 5 hinunter reicht. Die Höhe 8 der Abfallgrenze 6 in Vollgummireifen beträgt ca. 25 mm. Der Pfeil 7 zeigt die radiale Richtung des Vollgummireifens an.

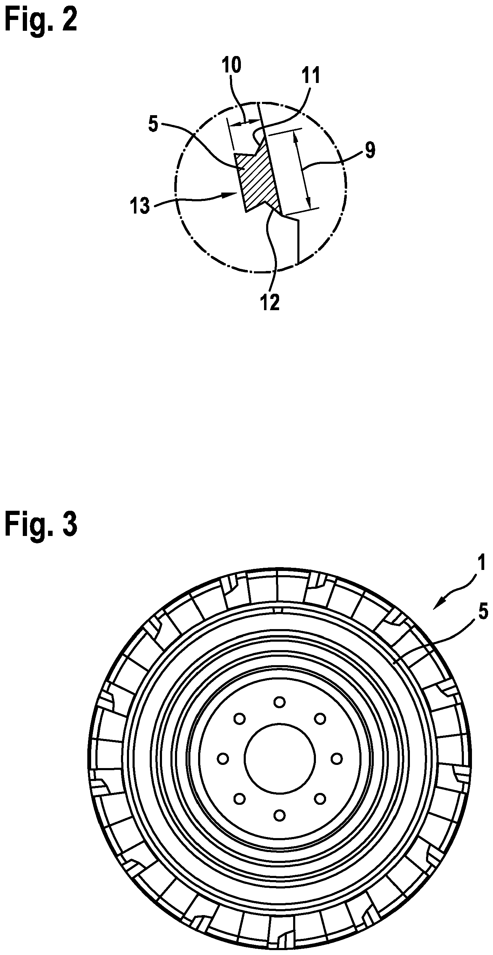

Die Fig. 2 zeigt einem vergrößerten Ausschnitt des Markierungsbauteiles 5 aus der Fig. 1. Das Markierungsbauteil 5 ist in der Nut 13 der Seitenwand angeordnet und wird dort in der dargestellten Weise formschlüssig gehalten. Die obere und untere Seite 11 und 12 des Markierungsbauteiles 5 besitzt eine V-förmige Form. Die Höhe des Markierungsbauteiles 9 beträgt zwischen 3 und maximal 10mm. Die Tiefe des Markierungsbauteiles 10 beträgt mindestens 5mm, damit das Markierungsbauteil sicher in der Nut 13 gehalten werden kann.

Die Fig. 3 zeigt den Vollreifen 1 mit der Fahrzeugfelge in einer Seitenansicht. Das rechte Markierungsbauteil 5 ist in der Seitenansicht als Kreisring zu erkennen.

### Bezugszeichenliste

- 1: Vollgummireifen
- 2: Linke Seitenwand
- 3: Rechte Seitenwand
- 4: Linkes Markierungsbauteil
- 5: Rechtes Markierungsbauteil
- 6: Abfahrgrenze
- 7: radiale Richtung
- 8: Höhe der Abfahrgrenze: ca. 25 mm
- 9: Höhe des Markierungsbauteiles
- 10: Tiefe des Markierungsbauteiles
- 11: Obere Seite des Markierungsbauteiles (V-förmig)
- 12: Untere Seite des Markierungsbauteiles (V-förmig)
- 13: Nut
- 14: Fahrzeugfelge
- 15: Aussparung bzw. Nut im Vollgummireifen

## Patentansprüche

1. Fahrzeugreifen,
wobei der Fahrzeugreifen ein Vollgummireifen (1) ist und zwei Seitenwände (2, 3) umfasst,
wobei der Vollgummireifen (1) in radialer Richtung (7) eine Abfahrgrenze (6) aufweist,
**dadurch gekennzeichnet, dass**
auf mindestens einer Seitenwand (2, 3) des Fahrzeugreifens ein Markierungsbauteil (4, 5) angeordnet ist, wobei das Markierungsbauteil (4, 5) im Querschnitt eine Tiefe (10) von mindestens 5 mm aufweist,
wobei das Markierungsbauteil (4, 5) in einer Nut (13) in der Seitenwand (2, 3) eingelassen ist, wobei das Markierungsbauteil (4, 5) die Nut (13) dabei vollständig ausfüllt,
wobei das Markierungsbauteil (4, 5) mit einer visuellen Kennzeichnung eine Abfahrgrenze (6) des Vollgummireifens (1) anzeigt, wobei das Markierungsbauteil (4, 5) in radialer Richtung (7) des Fahrzeugreifens direkt über der Abfahrgrenze (6) des Vollreifens (1) angeordnet ist.

2. Fahrzeugreifen nach Anspruch 1,
**dadurch gekennzeichnet, dass**
das Markierungsbauteil (4, 5) aus einer farbigen Gummimischung besteht,
wobei die farbige Gummimischung sich von der restlichen Farbe der Seitenwand (2, 3) unterscheidet.

3. Fahrzeugreifen nach einem der vorhergehenden Ansprüche,
**dadurch gekennzeichnet, dass**
das Markierungsbauteil (4, 5) bei Dunkelheit reflektierende Eigenschaften aufweist.

4. Fahrzeugreifen nach einem der vorhergehenden Ansprüche,
**dadurch gekennzeichnet, dass**
das Markierungsbauteil (4, 5) über einen Formschluss in der Nut der Seitenwand gehalten wird.

5. Fahrzeugreifen nach einem der vorhergehenden Ansprüche,
**dadurch gekennzeichnet, dass**
das Markierungsbauteil (4, 5) im Querschnitt in radialer Richtung (7) auf der Oberseite (11) und der Unterseite (12) eine V-förmige Seite aufweist.

6. Fahrzeugreifen nach einem der vorhergehenden Ansprüche,
**dadurch gekennzeichnet, dass**
das Markierungsbauteil (4, 5) im Querschnitt eine Höhe (9) von höchstens 10 mm aufweist.

7. Fahrzeugreifen nach einem der vorhergehenden Ansprüche,
**dadurch gekennzeichnet, dass**
das Markierungsbauteil (4, 5) über eine Klebeverbindung in der Nut (13)der Seitenwand (2, 3) gehalten wird.

## Claims

1. Vehicle tyre,
wherein the vehicle tyre is a solid rubber tyre (1) and comprises two sidewalls (2, 3),
wherein the solid rubber tyre (1) has a minimum tread depth (6) in the radial direction (7), **characterized in that**
a marking component (4, 5) is arranged on at least one sidewall (2, 3) of the vehicle tyre, wherein the marking component (4, 5) has in cross section a depth (10) of at least 5 mm, wherein the marking component (4, 5) is recessed in a groove (13) in the sidewall (2, 3), wherein the marking component (4, 5) completely fills the groove (13),
wherein the marking component (4, 5) indicates a minimum tread depth (6) of the solid rubber tyre (1) by a visual identification, wherein the marking component (4, 5) is arranged directly above the minimum tread depth (6) of the solid tyre (1) in the radial direction (7) of the vehicle tyre.

2. Vehicle tyre according to Claim 1,
**characterized in that**
the marking component (4, 5) consists of a coloured rubber compound, wherein the coloured rubber compound differs from the colour of the rest of the sidewall (2, 3).

3. Vehicle tyre according to one of the preceding claims,
**characterized in that**
the marking component (4, 5) has reflective properties in the dark.

4. Vehicle tyre according to one of the preceding claims,
**characterized in that**
the marking component (4, 5) is held in the groove of the sidewall by a form fit.

5. Vehicle tyre according to one of the preceding claims,
**characterized in that**
the marking component (4, 5) has in cross section in the radial direction (7) a V-shaped side on the upper side (11) and the underside (12).

6. Vehicle tyre according to one of the preceding claims,
**characterized in that**
the marking component (4, 5) has in cross section a height (9) of at most 10 mm.

7. Vehicle tyre according to one of the preceding claims,
**characterized in that** the marking component (4, 5) is held in the groove (13) of the sidewall (2, 3) by an adhesive bond.

## Revendications

1. Pneu de véhicule,
le pneu de véhicule comprenant un bandage plein en caoutchouc (1) et deux parois latérales (2, 3),
le bandage plein en caoutchouc (1) présentant dans la direction radiale (7) une limite d'usure (6),
**caractérisé en ce**
**qu'**un composant de marquage (4, 5) est disposé sur au moins une paroi latérale (2, 3) du pneu de véhicule, le composant de marquage (4, 5) présentant en section transversale une profondeur (10) d'au moins 5 mm,
le composant de marquage (4, 5) étant incorporé dans une rainure (13) de la paroi latérale (2, 3), le composant de marquage (4, 5) remplissant en l'occurrence complètement la rainure (13),
le composant de marquage (4, 5) indiquant, par une caractéristique visuelle, une limite d'usure (6) du bandage plein en caoutchouc (1), le composant de marquage (4, 5) étant disposé dans la direction radiale (7) du pneu de véhicule directement au-dessus de la limite d'usure (6) du bandage plein (1) .

2. Pneu de véhicule selon la revendication 1,
**caractérisé en ce que**
le composant de marquage (4, 5) se compose d'un mélange de caoutchouc coloré,
le mélange de caoutchouc coloré se distinguant du reste de la couleur de la paroi latérale (2, 3).

3. Pneu de véhicule selon l'une quelconque des revendications précédentes,
**caractérisé en ce que**
le composant de marquage (4, 5) présente des propriétés réfléchissantes dans l'obscurité.

4. Pneu de véhicule selon l'une quelconque des revendications précédentes,
**caractérisé en ce que**
le composant de marquage (4, 5) est retenu dans la rainure de la paroi latérale par le biais d'un engagement par correspondance de formes.

5. Pneu de véhicule selon l'une quelconque des revendications précédentes,
**caractérisé en ce que**
le composant de marquage (4, 5) présente, en section transversale dans la direction radiale (7) sur le côté supérieur (11) et le côté inférieur (12), un côté en forme de V.

6. Pneu de véhicule selon l'une quelconque des revendications précédentes,
**caractérisé en ce que**
le composant de marquage (4, 5) présente en section transversale une hauteur (9) de 10 mm maximum.

7. Pneu de véhicule selon l'une quelconque des revendications précédentes,
**caractérisé en ce que**
le composant de marquage (4, 5) est retenu dans la rainure (13) de la paroi latérale (2, 3) par le biais d'une liaison par collage.
